# EUROPEAN PATENT SPECIFICATION

(11) **EP 2 521 394 B1**
(45) Date of publication and mention of the grant of the patent: **06.05.2020**
(21) Application number: 10840386.6
(22) Date of filing: 24.06.2010
(51) Int. Cl.: H04W 24/02, H04W 24/04, H04W 88/08, H04W 88/18, H04B 7/04, H01Q 3/00, H01Q 1/00, H04W 16/28, H04B 17/17, H04W 24/00

(54) **MANAGEMENT SYSTEM AND METHOD FOR ELECTRICALLY-REGULATED ANTENNA**
VERWALTUNGSSYSTEM UND VERFAHREN FÜR EINE ELEKTRISCH GEREGELTE ANTENNE
SYSTÈME ET PROCÉDÉ DE GESTION POUR UNE ANTENNE À RÉGLAGE ÉLECTRIQUE

(30) Priority: 31.12.2009 CN 200910261867
(43) Date of publication of application: 07.11.2012
(73) Proprietor: ZTE Corporation, Shenzhen, Guangdong 518057 (CN)
(72) Inventor: YI, Song, Guangdong 518057 (CN)
(74) Representative: Dehns
(86) International application number: PCT/CN2010/074400
(87) International publication number: WO 2011/079597

(56) References cited:
- EP-A1- 2 031 764
- EP-A2- 2 003 731
- WO-A1-2006/057613
- WO-A1-2009/097282
- CN-A- 101 232 123
- CN-A- 101 232 123
- CN-C- 100 502 538
- CN-C- 100 558 001
- GB-A- 2 414 137
- "3rd Generation Partnership Project; Technical Specification Group Radio Access Network; UTRAN Iuant interface: General aspects and principles (Release 9)", 3GPP STANDARD; 3GPP TS 25.460, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 17 December 2009 (2009-12-17), pages 1-11, XP050401003, [retrieved on 2009-12-17]
- "3rd Generation Partnership Project; Technical Specification Group Radio Access Network; UTRAN Iuant Interface: Remote Electrical Tilting (RET) antennas Application Part (RETAP) signalling (Release 7)", 3GPP STANDARD; 3GPP TS 25.463, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.5.0, 1 March 2007 (2007-03-01), pages 1-41, XP050369075,

## Description

### Field of the Invention

The present invention relates to the communication field, and in particular to a system and method for managing an electrically-regulated antenna.

### Background of the Invention

The rapid development of the mobile communication technology increasingly promotes the advance of the antenna technology. The electrically-regulated antenna equipment is already widely applied in the communication field. The electrically-regulated antenna is a radio frequency receiving apparatus corresponding to mechanical antenna. The electrically-regulated antenna can regulate the down-tilt of the antenna by way of electronic control. The principle thereof is that: by way of changing the phase of the collinear array antenna element, the amplitude of the vertical component and horizontal component, and the field intensity of the composite component field, the object of regulating the down-tilt of the vertical direction radiation pattern of the antenna is achieved. As compared to mechanical antenna, the electrically-regulated antenna has the features as follows: the regulation thereof is simple, and the regulation precision is high. Since the maintenance personnel do not need to directly carry out mechanical operation, the down-tilt of the antenna can be regulated when the antenna is under the working state. Therefore, the electrically-regulated antenna can also be used to significantly reduce the operation and maintenance costs and improve the working efficiency.

Currently, the control method of the electrically-regulated antenna is mainly divided into two classes.
(1) A controller is installed onto the antenna and directly connected to the driver of the antenna. The inventors have found that by way of this method, the maintenance personnel need to operate on site before regulating the antenna, and need to climb up the tower to connect the third party controller during the operation, and then can carry out regulation. Such operation manner has certain risk, and the material and human resource costs are rather high. If it needs to carry out regulation for many times, the operation process will be more cumbersome.
(2) The controller is used as a module of a base station sub-system, and the LMT (Local Maintenance Terminal) manner is used to operate the electrically-regulated antenna under the BTS (Base Transceiver Station). The inventors have found that this method still needs the maintenance personnel to arrive at the BTS room to regulate the antenna, and one regulation can only be operated on the antenna under one BTS. If it needs to operate all the BTSs under one BSC (Base Station Controller) in one time, then the maintenance personnel need to go to many places to carry out the regulation, which significantly affects the operation efficiency and at the same time brings additional costs.

D1 (WO 2006/057613 A1), D2 (EP 2003731 A2), D3 (3GPP TS 25.460, pages 1-11, 2009-12-17), D4 (3GPP TS 25.463, pages 1-41, 2007-03-01) and CN 101 232 123 A1 provide related technical solutions; however, the above mentioned problem still remains unsolved

### Summary of the Invention

The invention is defined in the appended set of claims.

The main object of the present invention is to provide a system and method for managing an electrically-regulated antenna, so as to solve the above problem that the maintenance personnel need to manage the electrically-regulated antenna on site and thus causing low operation efficiency and high costs.

A system for managing an electrically-regulated antenna is provided according to one aspect of the present invention, comprising: a controller, provided in an operation maintenance center (OMC) server and configured for receiving an operation instruction from an input device and/or a report from a driver, and issuing a control command according to the operation instruction and/or the report; the input device, provided in an operation maintenance center client or a command line terminal and configured for receiving an operation instruction sent from a user and/or displaying a report from the controller and issuing a control command according to the operation instruction and/or the report; a proxy module, provided in a radio frequency subsystem (RFS) and configured for forwarding the control command; a link module, provided in the RFS and configured for establishing an active link between the driver and the proxy module; and the driver, provided in the electrically-regulated antenna and configured for executing the control command on the electrically-regulated antenna and reporting an operation result of executing the control command and/or a failure reason code; wherein the control command issued by the controller follows the antenna interface standard group protocol; the controller issues the control command by way of converting the format of the operation instruction into the format of the antenna interface standard group protocol.

Optionally, in the above management system, the report from the driver follows the Antenna Interface Standard Group (AISG) protocol.

In the above management system, the proxy module is further configured for initiating a scanning request toward the link module when the RFS is powered up; and the link module is further configured for scanning the electrically-regulated antennae so as to determine a currently operable electrically-regulated antenna.

Optionally, the OMC server is an OMM (Operation Maintenance Module) server, the input device is a client of the OMM server, and the electrically-regulated antenna belongs to a BTS managed by the OMM server; or the OMC server is an NMC (Network Management Center) server, the input device is a client of the NMC server, and the electrically-regulated antenna belongs to a BTS of the whole network managed by the NMC server.

A method for managing an electrically-regulated antenna is provided according to another aspect of the present invention, comprising: a controller, provided in an OMC server, receiving an operation instruction from an input device and/or a report from a driver; the controller issuing a control command according to the operation instruction and/or the report; a proxy module, provided in an RFS, forwarding the control command to the driver; the driver, provided in the electrically-regulated antenna, executing the control command on the electrically-regulated antenna and reporting the operation result of executing the control command and/or a failure reason code; the proxy module forwarding the report to the controller; and the input device displaying the operation result and the failure reason code; wherein the control command issued by the controller follows the antenna interface standard group protocol; the controller issues the control command by way of converting the format of the operation instruction into the format of the antenna interface standard group protocol.

Optionally, in the above management method, the report from the driver follows the AISG protocol.

Optionally, the above management method further comprises: a link module, provided in the RFS, establishing an active link between the driver and the proxy module, with the communication between the driver and the proxy module being carried out over the active link.

In the above management method further includes: the proxy module initiating a scanning request toward the link module when the RFS is powered up; and the link module scanning the electrically-regulated antennae so as to determine a currently operable electrically-regulated antenna.

Optionally, in the above management method, the link module or the controller filters tasks according to client ID + client task ID so as to ensure that the operation instruction only issues one task toward one driver at one moment.

The system and method for managing an electrically-regulated antenna in the above embodiments of the present invention solves the problem that the maintenance personnel needs to manage the electrically-regulated antenna on site and thus causing low operation efficiency and high costs by way of providing the controller in the OMC server. Thereby, the system and method achieve the effects that the maintenance personnel can manage the electrically-regulated antenna remotely, the working efficiency is improved and the costs are reduced.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a schematic diagram of a system for managing an electrically-regulated antenna according to one embodiment of the present invention;
Fig. 2 is a flowchart of a method for managing an electrically-regulated antenna according to one basic embodiment of the present invention;
Fig. 3 is a flowchart of a method for managing an electrically-regulated antenna according to a preferred embodiment of the present invention; and
Fig. 4 shows a flowchart of scanning according to an optional embodiment of the present invention.

### Detailed Description of Embodiments

The present invention will be described hereinafter in detail with reference to the drawings and in conjunction with the embodiments. It needs to be noted that the embodiments of the present application and the features in the embodiments can be combined with each other if there is no conflict.

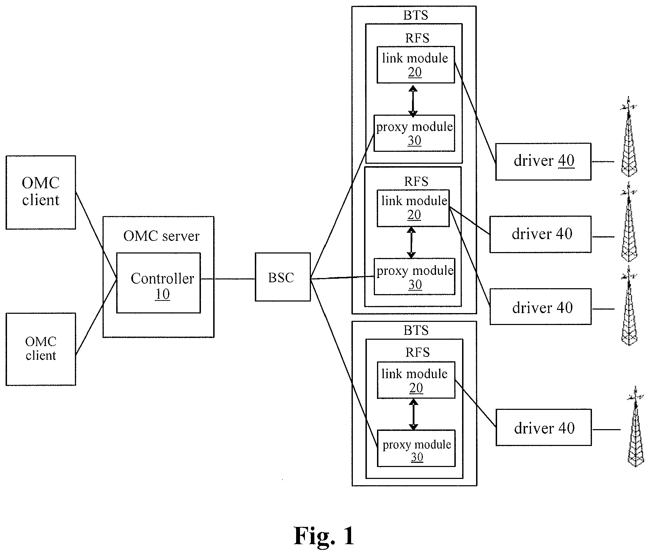

Fig. 1 is a schematic diagram of system for managing an electrically-regulated antenna according to one embodiment of the present invention, including:
a controller **10,** provided in an OMC server and configured for receiving an operation instruction from an input device (such as the OMC client shown in the figure) and/or a report from a driver **40** and issuing a control command according to the operation instruction and/or the report;
a proxy module **30,** provided in an RFS and connected to the controller **10** and configured for forwarding the control command;
a link module **20,** provided in the RFS and configured for establishing an active link between the driver **40** and the proxy module **30;** and
the driver **40,** provided in the electrically-regulated antenna and configured for executing the control command on the electrically-regulated antenna and reporting the operation result of executing the control command and/or a failure reason code.

The system for managing an electrically-regulated antenna in this embodiment integrates the electrically-regulated antenna management system into the OMC server, and thereby improves and supplements the currently available TMN (Telecommunication Management Network) frame. The original TMN management functions are divided into five classes according to different application ranges: performance management, fault management, configuration management, accounting management and security management. In the above embodiment, the management and maintenance of the electrically-regulated antenna is taken as new management content to be integrated into the management frame of TMN.

Since the electrically-regulated antenna management system in this embodiment provides the controller in the OMC server, the maintenance personnel can use the controller to manage the remote electrically-regulated antenna by logging into the OMC server. The system solves the problem that the maintenance personnel need to manage the electrically-regulated antenna on site and thus causing low operation efficiency and high costs, thereby achieving the effects that the maintenance personnel can manage the electrically-regulated antenna remotely, the working efficiency is improved and the costs are reduced.

The control command issued by the controller **10** and the report from the driver **40** follow the AISG protocol. The AISG protocol is a protocol for controlling the electrically-regulated antenna. By following this protocol, the electrically-regulated antenna can be easily managed, such as down-tilt regulation, antenna calibration, soft reset, etc. Of course, the user can also manage the electrically-regulated antenna by using a custom protocol or a specific manufacturer's protocol, if the electrically-regulated antenna can support it. The present invention is not limited to this optional embodiment.

The controller **10** issues the control command by way of converting the format of the operation instruction into a format following the AISG protocol.

In the above management system, the proxy module **30** is further configured for initiating a scanning request toward the link module when the RFS is powered up; and the link module **20** is further configured for scanning the electrically-regulated antennae so as to determine a currently operable electrically-regulated antenna. For example, after the RFS main control board is powered up, the proxy module initiates an operation of scanning the currently connected antennae toward the link module. The link module scans all the connected antennae, allocates addresses, maintains the connection of the links, and feeds back the information about the scanned antennae to the OMC server via the RFS proxy. The OMC server records the currently scanned antennae. This optional embodiment can manage the electrically-regulated antenna in a more optimized way. For example, the maintenance personnel can actively initiate an inquiry or scanning request by the OMC client to require the link module to obtain the currently operable electrically-regulated antenna.

The maintenance personnel can also manually initiate an inquiry or scanning message using the OMC client. The OMC client directly sends the scanning and inquiry message to the proxy module. In this case, the proxy module only completes the work of forwarding the message to the link module, and the other procedure is similar to the automatic scanning procedure.

Optionally, in the above management system, the OMC server is an OMM (Operation Maintenance Module) server, the input device is a client of the OMM server, and the electrically-regulated antenna belongs to a BTS managed by the OMM server; or the OMC server is an NMC (Network Management Center) server, the input device is a client of the NMC server, and the electrically-regulated antenna belongs to a BTS of the whole network managed by the NMC server. For example, the specific implementation of the functions of scanning, inquiry, and antenna regulation can be combined with configuring the management module in the OMC server frame. Before the scanning, inquiry or regulation, the maintenance personnel can inquire for all the currently configured BTSs and RFSs. When the user actively initiates a scanning/inquiry/regulation command, the maintenance personnel are allowed to scan a plurality of RFSs under the same BSC in one time so as to achieve the object of whole network scanning/inquiry/regulation.

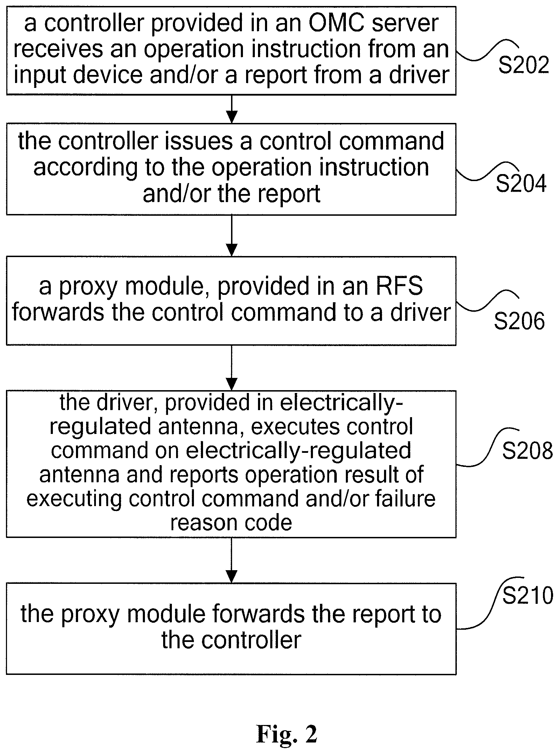

Fig. 2 is a flowchart of a method for managing an electrically-regulated antenna according to one basic embodiment of the present invention. The method comprises the following steps.

Step S202: a controller provided in an OMC server receives an operation instruction from an input device and/or a report from a driver.

Step S204: the controller issues a control command according to the operation instruction and/or the report.

Step S206: a proxy module, provided in an RFS, forwards the control command to a driver.

Step S208: the driver, provided in the electrically-regulated antenna, executes the control command on the electrically-regulated antenna and reports the operation result of executing the control command and/or a failure reason code.

Step S210: the proxy module forwards the report to the controller.

Since the electrically-regulated antenna management system in this embodiment provides the controller in the OMC server, the maintenance personnel can use the controller to manage the remote electrically-regulated antenna by logging into the OMC server. It solves the problem that the maintenance personnel need to manage the electrically-regulated antenna on site and thus causing low operation efficiency and high costs. Thereby, it achieves the effects that the maintenance personnel can manage the electrically-regulated antenna remotely, the working efficiency is improved and the costs are reduced.

In the above management method, the control command issued by the controller and the report from the driver follow the AISG protocol. The AISG protocol is a protocol for controlling the electrically-regulated antenna, and the electrically-regulated antenna can be easily managed by following this protocol. Of course, the user can also manage the electrically-regulated antenna using a custom protocol or a specific manufacture's protocol, if the electrically-regulated antenna can support it.

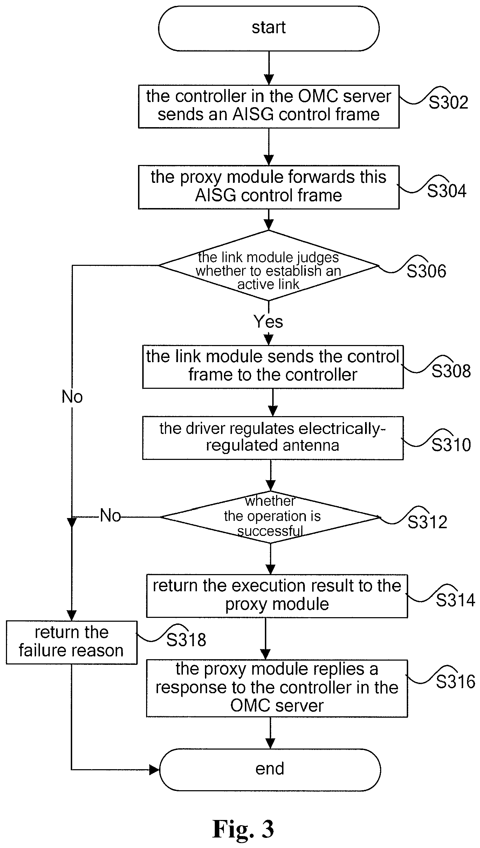

Fig. 3 is a flowchart of a method for managing an electrically-regulated antenna according to a preferred embodiment of the present invention. The maintenance personnel send a command (such as down-tilt regulation, antenna calibration, soft reset, etc.) defined by the AISG protocol to a designated electrically-regulated antenna using the OMC client. The OMC server parses the control message of the client, records the current task, starts up a task overtime timer, carries out task management on the task, and sends the AISG protocol standard command to the proxy module according to the RFS address and the antenna address in the message after converting the structure of the command of the client into a standard command structure of the AISG protocol. The particular process of the operation is as follows.

Step S302: the controller in the OMC server sends an AISG control frame as a control command. For example, the OMC client constructs a custom regulation message, i.e. operation instruction, after receiving a user regulation command. The regulation message includes the destination antenna driver address, destination RFS address, task ID of regulation task, and custom command structure (including regulation command number, command parameter, etc.). The construction rule of the task ID of the regulation task is that the Session ID of the client shifts 8 bit to the left and pluses 8 bits client task number. The definition of the same client task number is constructed by the manner of starting accumulation from 0, so as to ensure that the definition of the task number is unique at the service end. After having received the custom regulation command of the client, the OMC server adds the task into a service end task pool, converts the custom regulation command into a standard AISG command, sends the same to the proxy module, starts up the task overtime timer, and waits for the device to respond.

Step S304: the proxy module forwards this AISG control frame.

Step S306: the link module judges whether to establish an active link. If it is judged that a link cannot be established, then perform Step S318, and return the failure reason to the OMC server; and if an active link can be established, then perform the following steps.

Step S308: the link module sends the control frame to the driver.

Step S310: after having received the AISG protocol standard command, the antenna driver performs the corresponding action to regulate the electrically-regulated antenna.

Step S312: the driver judges whether the operation is successful, and if it is failed, then perform Step S318 and return the failure reason to the OMC server; and if it is successful, then perform the following steps.

Step S314: return the execution result to the proxy module.

Step S316: the proxy module replies a response to the controller in the OMC server.

Subsequently, the corresponding task in the task pool can be cleared according to the task ID in the OMC server, the regulation antenna data are recorded, and the result is sent to the client for displaying. The failure reason can also be displayed to the maintenance personnel.

In this embodiment, the AISG device management module in the CDMA wireless communication system is taken as an example to describe the present invention, but it is not intended to limit the present invention.

The AISG device management module is a module dedicated to operating and maintaining the AISG device (which refers to all devices comply with the AISG protocol, and it can be single antenna, multi-antenna, or tower amplifier, etc.). This module achieves the object of managing the antenna in a centralized way by using the OMC server to manage the functions of the electrically-regulated antenna device.

This embodiment can be practically applied in the CDMA2000 system. This solution is convenient for the maintenance personnel to achieve centralized management of the electrically-regulated antenna, which significantly reduces the previous cumbersome operations of regulating the antenna and at the same time reduces the operation and maintenance costs of the electrically-regulated antenna. This method is simple, stable, reliable, easy to implement, and has wide practical application value. It needs to be noted that the method provided by the present invention is not limited to the CDMA base station subsystem, but is suitable for all mobile communication systems.

The controller issues the control command by way of converting the format of the operation instruction into a format following the AISG protocol. According to the AISG protocol, the controller integrated in the OMC server can use the control command to complete operations such as input receiving, protocol conversion, multi-task management, data update and processing. For example, the maintenance personnel sends a command (such as down-tilt regulation, antenna calibration, soft reset, etc.) defined by the AISG protocol toward the designated electrically-regulated antenna using the OMC client. The controller completes the conversion from a custom message interface to an AISG command structure, carries out task management on the operation task, and updates the antenna information data according to the message returned by the antenna.

Optionally, the above management method further comprises: a link module, provided in the RFS, establishing an active link between the driver and the proxy module, with the communication between the driver and the proxy module being carried out over the active link. By way of establishing an active link, the communication between the driver and the proxy module can be easily accomplished, thus the maintenance operation can be carried out remotely.

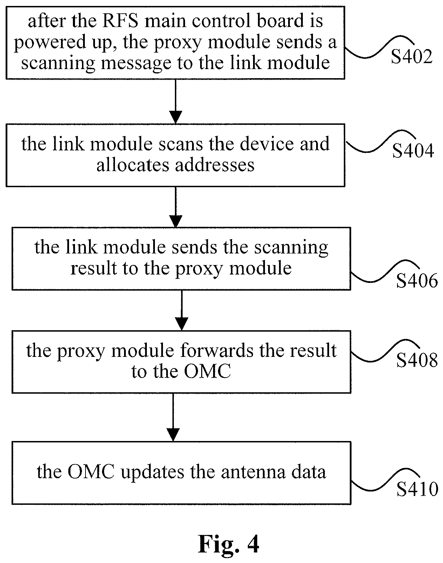

The above management method further includes: the proxy module initiating a scanning request toward the link module when the RFS is powered up; and the link module scanning the electrically-regulated antennae so as to determine a currently operable electrically-regulated antenna. Fig. 4 shows a flowchart of scanning according to an optional embodiment of the present invention, including the following steps:
Step S402: after the RFS main control board is powered up, the proxy module initiates toward the link module an operation of scanning the currently connected antennae;
Step S404: the link module scans all the connected antennae and allocates the addresses;
Step S406: the link module maintains the connection of the links and sends the information about the scanned antennae to the proxy module;
Step S408: the proxy module forwards the scanning result to the OMC server (i.e. controller); and
Step S410: the OMC server records the currently scanned antennae.

This embodiment can manage the electrically-regulated antenna in a more optimized way. For example, the maintenance personnel can actively initiate an inquiry or scanning request by the OMC client to require the link module to obtain the currently operable electrically-regulated antenna.

Optionally, in the above management method, the link module or the controller filters tasks according to client ID + client task ID so as to ensure that the operation instruction only issues one task toward one driver at one moment. According to the frame structure of the OMC server, one OMC server usually allows a plurality of clients to access and operate simultaneously. In this embodiment, the manner of client ID + client task ID is used to identify different tasks, which solves the task management of multi-client operation. Since one AISG device can only execute one AISG instruction at one moment, the link module or OMC server still needs to filter the completed tasks. This ensures the uniqueness of the task of the AISG driver at one moment, which can solve the problem of managing electrically-regulated antenna controller when multi-clients operate tasks.

In the above embodiments of the present invention, the electrically-regulated antenna controller is directly integrated into the mobile communication network management system. The object of managing the antenna is achieved by way of the direct interaction with the electrically-regulated antenna through the AISG protocol. The maintenance personnel do not need to be on site but only need to log into any client of the OMC server connected to this BSC to complete the management and regulation of the electrically-regulated antenna. Thus, the object that the electrically-regulated antenna devices under one or more BSCs are managed and maintained in a centralized way with low costs is achieved.

Obviously, those skilled in the art should understand that the above module or steps of the present invention can be implemented using a general-purpose computing apparatus. And they can be integrated on a single computing apparatus or distributed over a network consisted of multiple computing apparatus. Optionally, they can be implemented using computing apparatus executable program code. Thus, they can be stored in a storage for being executed by the computing apparatus. In some cases, the shown or described steps can be performed in an order different from the order here. Or, they can be made into various integrated circuit modules respectively, or some modules or steps therein are made into a single integrated circuit module for implementation. In this way, the present invention is not limited to any particular combination of hardware and software.

Above description is only to illustrate the preferred embodiments but not to limit the present invention. Various alternations and changes to the present invention are apparent to those skilled in the art.

## Claims

1. A system for managing an electrically-regulated antenna, comprising:
a controller (10), provided in an operation maintenance center server and configured for receiving an operation instruction from an input device and/or a report from a driver (40), and issuing a control command according to the operation instruction and/or the report;
the input device, provided in an operation maintenance center client or a command line terminal and configured for receiving an operation instruction sent from a user and/or displaying a report from the controller and issuing a control command according to the operation instruction and/or the report;
a proxy module (30), provided in a radio frequency, RF, subsystem, RFS, of a Base Transceiver Station, BTS and configured for forwarding the control command;
a link module (20), provided in the RF subsystem, RFS, of a Base Transceiver Station, BTS, and configured for establishing an active link between the driver (40) and the proxy module (30); and
the driver (40), provided in the electrically-regulated antenna and configured for executing the control command on the electrically-regulated antenna and reporting an operation result of executing the control command and/or a failure reason code;
wherein the control command issued by the controller (10) follows the antenna interface standard group protocol; the controller (10) issues the control command by way of converting the format of the operation instruction into the format of the antenna interface standard group protocol;
**characterized in that** the proxy module (30) is further configured for initiating a scanning request toward the link module (20) when the RF subsystem is powered up; and the link module (20) is further configured for scanning electrically-regulated antennae so as to determine a currently operable electrically-regulated antenna and feeding back the currently operable electrically-regulated antenna to the operation maintenance center server.

2. The management system according to Claim 1, **characterized in that** the report from the driver (40) follows the antenna interface standard group protocol.

3. The management system according to Claim 1, **characterized in that**
the operation maintenance center server is a management operation maintenance module server, the input device is a client or a command line terminal of the management operation maintenance module server, and the electrically-regulated antenna belongs to a base transceiver station managed by the management operation maintenance module server; or
the operation maintenance center server is a network management center server, the input device is a client of the network management center server, and the electrically-regulated antenna belongs to a base transceiver station of a whole network managed by the network management center server.

4. A method for managing an electrically-regulated antenna, comprising:
receiving, by a controller (10) provided in an operation maintenance center server, an operation instruction from an input device and/or a report from a driver (40);
issuing, by the controller (10), a control command according to the operation instruction and/or the report;
forwarding, by a proxy module (30) provided in a radio frequency, RF, subsystem, RFS, of a Base Transceiver Station, BTS, the control command to the driver (40);
executing, by the driver (40) provided in the electrically-regulated antenna, the control command on the electrically-regulated antenna and reporting an operation result of executing the control command and/or a failure reason code;
forwarding, by the proxy module (30), the report to the controller (10); and
displaying, by the input device, the operation result and the failure reason code;
wherein the control command issued by the controller (10) follows the antenna interface standard group protocol; the controller (10) issues the control command by way of converting the format of the operation instruction into the format of the antenna interface standard group protocol;
**characterized by** further comprising:
initiating, by the proxy module (30), a scanning request toward a link module (20) when the RF subsystem is powered up; and
scanning, by the link module (20), electrically-regulated antennae so as to determine a currently operable electrically-regulated antenna and feeding back the currently operable electrically-regulated antenna to the operation maintenance center server.

5. The management method according to Claim 4, **characterized in that** the report from the driver (40) follows the antenna interface standard group protocol.

6. The management method according to Claim 4, **characterized by** further comprising:
establishing, by a link module (20) provided in the RF subsystem, an active link between the driver (40) and the proxy module (30), wherein communication between the driver (40) and the proxy module (30) is carried out over the active link.

7. The management method according to Claim 4, **characterized in that** different tasks are identified using the manner of client ID + client task ID, and the method further comprises:
filtering, by the link module (20) or the controller (10), tasks according to the client ID + client task ID, so as to ensure that the operation instruction only issues one task toward one driver at one moment.

8. The management method according to Claim 4, **characterized in that** the operation instruction comprises destination antenna driver address, destination RF subsystem address, task ID of regulation task, and regulation command number and command parameter.

## Patentansprüche

1. System zum Verwalten einer elektrisch geregelten Antenne, Folgendes umfassend:
eine Steuereinheit (10), die auf einem Server eines Betriebswartungszentrums bereitgestellt ist, und zum Empfangen einer Betriebsanweisung von einer Eingabevorrichtung und/ oder eines Berichts von einem Treiber (40), und zum Ausgeben eines Steuerbefehls entsprechend der Betriebsanweisung und/ oder dem Bericht konfiguriert ist;
die Eingabevorrichtung, die in einem Client eines Betriebswartungszentrums oder einem Befehlszeilenterminal bereitgestellt ist, und zum Empfangen einer Betriebsanweisung, die von einem Nutzer gesendet wird, und/ oder zum Anzeigen eines Berichts von der Steuereinheit und zum Ausgeben eines Steuerbefehls entsprechend der Betriebsanweisung und/ oder dem Bericht konfiguriert ist;
ein Proxy-Modul (30), das in einem Funkfrequenz-, RF-, Teilsystem, RFS, einer Basis-Transceiver-Station, BTS, bereitgestellt ist, und zum Weiterleiten des Steuerbefehls konfiguriert ist;
ein Link-Modul (20), das in dem RF-Teilsystem, RFS, einer Basis-Transceiver-Station, BTS, bereitgestellt ist, und zum Erstellen eines aktiven Links zwischen dem Treiber (40) und dem Proxy-Modul (30) konfiguriert ist; und
den Treiber (40), der in der elektrisch geregelten Antenne bereitgestellt ist und zum Ausführen des Steuerbefehls in der elektrisch geregelten Antenne und zum Berichten eines Betriebsergebnisses der Ausführung des Steuerbefehls und/ oder eines Fehlerursachencodes konfiguriert ist;
wobei der Steuerbefehl, der durch die Steuereinheit (10) ausgegeben wird, dem Antennenschnittstellen-Standardgruppenprotokoll folgt; die Steuereinheit (10) den Steuerbefehl anhand einer Umwandlung des Formats der Betriebsanweisung in das Format des Antennenschnittstellen-Standardgruppenprotokolls ausgibt;
**dadurch gekennzeichnet, dass** das Proxy-Modul (30) weiter zum Initiieren einer Scan-Anfrage zu dem Link-Modul (20) konfiguriert ist, wenn das RF-Teilsystem mit Strom versorgt wird; und das Link-Modul (20) weiter zum Scannen von elektrisch geregelten Antennen, um eine aktuell betreibbare elektrisch geregelte Antenne zu bestimmen, und zum Rückführen der aktuell betreibbaren elektrisch geregelten Antenne zu dem Server eines Betriebswartungszentrums konfiguriert ist.

2. Verwaltungssystem nach Anspruch 1, **dadurch gekennzeichnet, dass** der Bericht von den Treiber (40) dem Antennenschnittstellen-Standardgruppenprotokoll folgt.

3. Verwaltungssystem nach Anspruch 1, **dadurch gekennzeichnet, dass** der Server eines Betriebswartungszentrums ein Server eines Verwaltungsbetriebswartungsmoduls ist, die Eingabevorrichtung ein Client oder ein Befehlszeilenterminal des Server eines Verwaltungsbetriebswartungsmoduls ist und die elektrisch geregelte Antenne zu einer Basis-Transceiver-Station gehört, die durch den Server eines Verwaltungsbetriebswartungsmoduls verwaltet wird; oder
der Server eines Betriebswartungszentrums ein Server eines Netzwerkverwaltungszentrums ist, die Eingabevorrichtung ein Client des Servers eines Netzwerkverwaltungszentrums ist, und die elektrisch geregelte Antenne zu einer Basis-Transceiver-Station eines gesamten Netzwerks gehört, das durch den Server eines Netzwerkverwaltungszentrums verwaltet wird.

4. Verfahren zum Verwalten einer elektrisch geregelten Antenne, Folgendes umfassend:
Empfangen, durch eine Steuereinheit (10), die in einem Server eines Betriebswartungszentrums bereitgestellt ist, einer Betriebsanweisung von einer Eingabevorrichtung und/ oder eines Berichts von einem Treiber (40);
Ausgeben, durch die Steuereinheit (10), eines Steuerbefehls entsprechend der Betriebsanweisung und/ oder dem Bericht;
Weiterleiten, durch ein Proxy-Modul (30), das in einem Funkfrequenz-, RF-, Teilsystem, RFS, einer Basis-Transceiver-Station, BTS, bereitgestellt ist, des Steuerbefehls an den Treiber (40);
Ausführen, durch den Treiber (40), der in der elektrisch geregelten Antenne bereitgestellt ist, des Steuerbefehls in der elektrisch geregelten Antenne und Berichten eines Betriebsergebnisses der Ausführung des Steuerbefehls und/ oder eines Fehlerursachencodes;
Weiterleiten, durch das Proxy-Modul (30), des Berichts an die Steuereinheit (10); und
Anzeigen, durch die Eingabevorrichtung, des Betriebsergebnisses und des Fehlerursachencodes;
wobei der Steuerbefehl, der durch die Steuereinheit (10) ausgegeben wird, dem Antennenschnittstellen-Standardgruppenprotokoll folgt; die Steuereinheit (10) den Steuerbefehl anhand einer Umwandlung des Formats der Betriebsanweisung in das Format des Antennenschnittstellen-Standardgruppenprotokolls ausgibt;
**dadurch gekennzeichnet, dass** es weiter Folgendes umfasst:
Initiieren, durch das Proxy-Modul (30), einer Scan-Anfrage zu einem Link-Modul (20), wenn das RF-Teilsystem mit Strom versorgt wird; und
Scannen, durch das Link-Modul (20), von elektrisch geregelten Antennen, um eine aktuell betreibbare elektrisch geregelte Antenne zu bestimmen, und Rückführen der aktuell betreibbaren elektrisch geregelten Antenne zu dem Server eines Betriebswartungszentrums.

5. Verwaltungsverfahren nach Anspruch 4, **dadurch gekennzeichnet, dass** der Bericht von dem Treiber (40) dem Antennenschnittstellen-Standardgruppenprotokoll folgt.

6. Verwaltungsverfahren nach Anspruch 4, **dadurch gekennzeichnet, dass** es weiter Folgendes umfasst:
Erstellen, durch ein Link-Modul (20), das in dem RF-Teilsystem bereitgestellt ist, eines aktiven Links zwischen dem Treiber (40) und dem Proxy-Modul (30), wobei Kommunikation zwischen dem Treiber (40) und dem Proxy-Modul (30) über den aktiven Link ausgeführt wird.

7. Verwaltungsverfahren nach Anspruch 4, **dadurch gekennzeichnet, dass** verschiedene Aufgaben unter Verwendung der Art von Client-ID + Client-Aufgaben-ID identifiziert werden und das Verfahren weiter Folgendes umfasst:
Filtern, durch das Link-Modul (20) oder die Steuereinheit (10), von Aufgaben entsprechend der Client-ID + Client-Aufgaben-ID, um zu gewährleisten, dass die Betriebsanweisung nur eine Aufgabe zu einem Treiber zu einem Zeitpunkt ausgibt.

8. Verwaltungsverfahren nach Anspruch 4, **dadurch gekennzeichnet, dass** die Betriebsanweisung Treiberadresse der Zielantenne, Adresse des Ziel-RF-Teilsystems, Aufgaben-ID der Regelungsaufgabe und Regelungsbefehlsnummer und Befehlsparameter umfasst.

## Revendications

1. Système pour gérer une antenne à réglage électrique, comprenant :
un contrôleur (10), prévu dans un serveur de centre de maintenance d'exploitation et configuré pour recevoir une instruction d'exploitation provenant d'un dispositif de saisie et/ou un rapport provenant d'un pilote (40), et la délivrance d'une commande de contrôle selon l'instruction d'exploitation et/ou le rapport ;
le dispositif de saisie, prévu dans un client de centre de maintenance d'exploitation ou un terminal de ligne de commande et configuré pour recevoir une instruction d'exploitation envoyée depuis un utilisateur et/ou afficher un rapport provenant du contrôleur et délivrer une commande de contrôle selon l'instruction d'exploitation et/ou le rapport ;
un module proxy (30), prévu dans un sous-système de radiofréquence, RF, RFS, d'une station émettrice-réceptrice de base, BTS, et configuré pour transférer la commande de contrôle ;
un module de liaison (20), prévu dans le sous-système RF, RFS, d'une station émettrice-réceptrice de base, BTS, et configuré pour établir une liaison active entre le pilote (40) et le module proxy (30) ; et
le pilote (40), prévu dans l'antenne à réglage électrique et configuré pour exécuter la commande de contrôle sur l'antenne à réglage électrique et établir un rapport d'un résultat d'exploitation de l'exécution de la commande de contrôle et/ou d'un code de cause de défaillance ;
dans lequel la commande de contrôle délivrée par le contrôleur (10) se conforme au protocole de groupe de norme d'interface d'antenne ; le contrôleur (10) délivre la commande de contrôle par conversion du format de l'instruction d'exploitation au format du protocole de groupe de norme d'interface d'antenne ;
**caractérisé en ce que** le module proxy (30) est en outre configuré pour initier une requête de balayage vers le module de liaison (20) lorsque le sous-système RF est démarré ; et le module de liaison (20) est en outre configuré pour balayer des antennes à réglage électrique de façon à déterminer une antenne à réglage électrique actuellement exploitable et pour réappliquer l'antenne à réglage électrique actuellement exploitable au serveur de centre de maintenance d'exploitation.

2. Système de gestion selon la revendication 1, **caractérisé en ce que** le rapport provenant du pilote (40) se conforme au protocole de groupe de norme d'interface d'antenne.

3. Système de gestion selon la revendication 1, **caractérisé en ce que**
le serveur de centre de maintenance d'exploitation est un serveur de module de maintenance d'exploitation de gestion, le dispositif de saisie est un client ou un terminal de ligne de commande du serveur de module de maintenance d'exploitation de gestion, et l'antenne à réglage électrique appartient à une station émettrice-réceptrice de base gérée par le serveur de module de maintenance d'exploitation de gestion ; ou
le serveur de centre de maintenance d'exploitation est un serveur de centre de gestion de réseau, le dispositif de saisie est un client du serveur de centre de gestion de réseau, et l'antenne à réglage électrique appartient à une station émettrice-réceptrice de base d'un réseau entier géré par le serveur de centre de gestion de réseau.

4. Procédé pour gérer une antenne à réglage électrique, comprenant :
la réception, par un contrôleur (10) prévu dans un serveur de centre de maintenance d'exploitation, d'une instruction d'exploitation provenant d'un dispositif de saisie et/ou d'un rapport provenant d'un pilote (40) ;
la délivrance, par le contrôleur (10), d'une commande de contrôle selon l'instruction d'exploitation et/ou le rapport ;
le transfert, par un module proxy (30) prévu dans un sous-système radiofréquence, RF, RFS, d'une station émettrice-réceptrice de base, BTS, de la commande de contrôle au pilote (40) ;
l'exécution, par le pilote (40) prévu dans l'antenne à réglage électrique, de la commande de contrôle sur l'antenne à réglage électrique et l'établissement d'un rapport d'un résultat d'exploitation de l'exécution de la commande de contrôle et/ou d'un code de cause de défaillance ;
le transfert, par le module proxy (30), du rapport au contrôleur (10) ; et
l'affichage, par le dispositif de saisie, du résultat d'exploitation et du code de cause de défaillance ;
dans lequel la commande de contrôle délivrée par le contrôleur (10) se conforme au protocole de groupe de norme d'interface d'antenne ; le contrôleur (10) délivre la commande de contrôle par conversion du format de l'instruction d'exploitation au format du protocole de groupe de norme d'interface d'antenne
**caractérisé en ce qu'**il comprend en outre :
l'initiation, par le module proxy (30), d'une requête de balayage vers un module de liaison (20) lorsque le sous-système RF est démarré ; et
le balayage, par le module de liaison (20), d'antennes à réglage électrique de façon à déterminer une antenne à réglage électrique exploitable actuellement et la réapplication de l'antenne à réglage électrique exploitable actuellement au serveur de centre de maintenance d'exploitation.

5. Procédé de gestion selon la revendication 4, **caractérisé en ce que** le rapport provenant du pilote (40) se conforme au protocole de groupe de norme d'interface d'antenne.

6. Procédé de gestion selon la revendication 4, **caractérisé en ce qu'**il comprend en outre :
l'établissement, par un module de liaison (20) prévu dans le sous-système RF, d'une liaison active entre le pilote (40) et le module proxy (30), dans lequel une communication entre le pilote (40) et le module proxy (30) est réalisée sur la liaison active.

7. Procédé de gestion selon la revendication 4, **caractérisé en ce que** différentes tâches sont identifiées en utilisant la manière de l'ID client + l'ID de tâche de client, et le procédé comprend en outre :
le filtrage, par le module de liaison (20) ou le contrôleur (10), de tâches selon l'ID de client + l'ID de tâche de client, de façon à garantir que l'instruction d'exploitation ne délivre qu'une tâche vers un pilote à un moment.

8. Procédé de gestion selon la revendication 4, **caractérisé en ce que** l'instruction d'exploitation comprend une adresse de pilote d'antenne de destination, une adresse de sous-système RF de destination, un ID de tâche de tâche de réglage et un numéro de commande de réglage et un paramètre de commande.
